# EUROPEAN PATENT APPLICATION

(11) **EP 4 800 420 A1**
(43) Date of publication of application: **02.09.2026**
(21) Application number: 25160161.3
(22) Date of filing: 26.02.2025
(51) Int. Cl.: G01S 5/02, G01S 19/25, G01S 5/14, H04W 64/00, H04W 4/02, H04W 56/00

(54) **SINGLE CELL BASED POSITIONING FOR A NON-TERRESTRIAL NETWORK**

(71) Applicant: Nokia Technologies Oy, 02610 Espoo (FI)
(72) Inventor: WIGARD, Jeroen, Klarup (DK); FREDERIKSEN, Frank, Klarup (DK); AHMADZADEH, Arman, Munich (DE); YU, Ling, Kauniainen (FI); MARCONE, Alessio, Munich (DE)
(74) Representative: Nokia EPO representatives

(57) **Abstract**

A user equipment and associated method are provided for performing, respective pre-compensation to one or more uplink transmission parameters on two or more reference points of a plurality of reference points, based on a respective geographical position of the two or more reference points; transmitting, to at least one network node, respective plurality of uplink signals for the two or more respective reference points, via respective transmission resources, based on the respective pre-compensation; receiving, from the at least one network node, at least one message providing information representative of plurality of errors associated with the plurality of reference points; and determining a position of the user equipment based on the plurality of errors. A corresponding network node and associated are also provided.

## Description

### TECHNOLOGICAL FIELD

An example embodiment relates generally relates to single cell based positioning for a non-terrestrial network, such as in support of wireless communication.

### BACKGROUND

In some circumstances, user equipment (UE) may communicate with a radio network via a non-terrestrial network. For example, in instances in which a UE is far away from a terrestrial base station and unable to reliably communicate with a terrestrial base station, a UE may communicate via a non-terrestrial network. A non-terrestrial network may be provided satellites, such as low-earth orbiting (LEO) satellites, that relay signals between a UE and a terrestrial base station such that coverage and service are provided to the UE in the instance in which the UE is far away from the terrestrial base station.

LEO satellites travel at a speed of about 7.5 kilometers (km) per second (s) relative to the Earth and operate at altitudes of 600 km to 1500 km above the Earth. A UE will therefore observe quickly varying propagation delays and a Doppler shift during communication with a LEO satellite and, in turn, during communication with a terrestrial base station that is relayed by the LEO satellite.

In order to ensure proper time and frequency synchronization between a UE and a non-terrestrial network, such as a LEO satellite, a UE is responsible for performing pre-compensation of uplink transmissions from the UE to the non-terrestrial network. In instances in which the UE is aware of its own location, such as by use of a global navigation satellite system (GNSS) that relies upon multilateration in which signals transmitted by at least four GNSS satellites are used to determine four previously unknown parameters (the (x,y,z) location of the UE and time t), the UE is capable of performing the pre-compensation since the UE is also able to determine the current and future position of the satellite in space. The position information for the satellite is known as the ephemeris of the satellite and is provided by the satellite to the UE via System Information Broadcast (SIB) messages. When the satellite serves to relay signals between the UE and a terrestrial base station, the SIB message also includes information on the manner in which the timing between the terrestrial base station and the satellite varies over time. In an instance in which the UE is not aware of its own location, such as for a UE without a GNSS receiver or otherwise does not utilize an external positioning system, however, it will be difficult or impossible for the UE to accurately perform pre-compensation.

### SUMMARY

The scope of protection sought for various example embodiments is set out by the claims. Certain example embodiments and features, if any, described in this specification that do not fall under the scope of the claims are to be interpreted as examples useful for understanding various embodiments.

In an example embodiment, user equipment (520) is provided for wireless communication, that may include: at least one processor (12); and at least one memory (14) storing instructions (15) that, when executed by the at least one processor (12), cause the user equipment (520) at least to: perform (530) respective pre-compensation (519-a, 519-b, 519-n) to one or more uplink transmission parameters (515) on two or more reference points (512-a, 512-b,... 512-n) of a plurality of reference points (512), based on a respective geographical position of the two or more reference points (512-a, 512b,... 512-n); transmit (533, 534, 535), to at least one network node (514), respective plurality of uplink signals (527-a, 527-b, 527-n) for the two or more respective reference points (512-a, 512-b,... 512-n) via respective transmission resources (523-a, 523-b, 523-n) based on the respective pre-compensation (519-a, 519-b, 519-n); receive (540), from the at least one network node (514), at least one message providing information representative of plurality of errors (515) associated with the plurality of reference points (512); and determine a position (517) of the user equipment (520) based on the plurality of errors (515).

In another example embodiment, a method is provided for wireless communication, that may include: performing (530) by a user equipment (520), respective pre-compensation (519-a, 519-b, 519-n) to one or more uplink transmission parameters (515) on two or more reference points (512-a, 512-b,... 512-n) of a plurality of reference points (512), based on a respective geographical position of the two or more reference points (512-a, 512b,... 512-n); transmitting (533, 534, 535), to at least one network node (514), respective plurality of uplink signals (527-a, 527-b, 527-n) for the two or more respective reference points (512-a, 512-b,... 512-n) via respective transmission resources (523-a, 523-b, 523-n) based on the respective pre-compensation (519-a, 519-b, 519-n); receiving (540), from the at least one network node (514), at least one message providing information representative of plurality of errors (515) associated with the plurality of reference points (512); and determining a position (517) of the user equipment (520) based on the plurality of errors (515).

In a further example embodiment, a user equipment (520) is provided for wireless communication, that may include: means for performing (530) respective pre-compensation (519-a, 519-b, 519-n) to one or more uplink transmission parameters (515) on two or more reference points (512-a, 512-b,... 512-n) of a plurality of reference points (512), based on a respective geographical position of the two or more reference points (512-a, 512b,... 512-n); means for transmitting (533, 534, 535), to at least one network node (514), respective plurality of uplink signals (527-a, 527-b, 527-n) for the two or more respective reference points (512-a, 512-b,... 512-n) via respective transmission resources (523-a, 523-b, 523-n) based on the respective pre-compensation (519-a, 519-b, 519-n); means for receiving (540), from the at least one network node (514), at least one message providing information representative of plurality of errors (515) associated with the plurality of reference points (512); and means for determining a position (517) of the user equipment (520) based on the plurality of errors (515).

In an example embodiment, a network node (514) is provided for wireless communication, that may include: at least one processor (12); and at least one memory (14) storing instructions (15) that, when executed by the at least one processor (12), cause the network node (514) at least to: receive (533, 534, 535), from a user equipment (520) via respective reception resources (523-a, 523-b, 523-n), a plurality of uplink signals (527) that are associated with two or more reference points (512-a, 512-b,... 512-n); determine a plurality of errors (515) associated with the plurality of reference points (512-a, 512-b,... 512-n) based on the respective reception resources (523-a, 523-b,... 523-n); and transmit (540), from the network node (514), at least one message providing information representative of the plurality of errors (515).

In another example embodiment, a method is provided for wireless communication, that may include: receiving (533, 534, 535) by a network node (514), from a user equipment (520) via respective reception resources (523-a, 523-b, 523-n), a plurality of uplink signals (527) that are associated with two or more reference points (512-a, 512-b,... 512-n); determining a plurality of errors (515) associated with the plurality of reference points (512-a, 512-b,... 512-n) based on the respective reception resources (523-a, 523-b,... 523-n); and transmitting (540), from the network node (514), at least one message providing information representative of the plurality of errors (515).

In a further example embodiment, a network node (514) is provided for wireless communication, that may include: means for receiving (533, 534, 535), from a user equipment (520) via respective reception resources (523-a, 523-b, 523-n), a plurality of uplink signals (527) that are associated with two or more reference points (512-a, 512-b,... 512-n); means for determining a plurality of errors (515) associated with the plurality of reference points (512-a, 512-b,... 512-n) based on the respective reception resources (523-a, 523-b,... 523-n); and means for transmitting (540), from the network node (514), at least one message providing information representative of the plurality of errors (515).

### BRIEF DESCRIPTION OF THE DRAWINGS

Having thus described certain example embodiments of the present disclosure in general terms, reference will hereinafter be made to the accompanying drawings, which are not necessarily drawn to scale, and where:
Figure 1 illustrates an example of a wireless communication network that relies upon a non-terrestrial network to support communication with a user equipment in accordance with an example embodiment of the present disclosure;
Figure 2A illustrates different positions that may be taken by user equipment while communicating with a satellite of a non-terrestrial network;
Figure 2B illustrates a range of delays that may be introduced in communications between a user equipment and a base station carried by a satellite of a non-terrestrial network;
Figure 3 illustrates a block diagram of an apparatus that may be configured in accordance with an example embodiment of the present disclosure;
Figure 4 illustrates a signal flow diagram between a user equipment and a network node of a non-terrestrial network in accordance with an example embodiment of the present disclosure;
Figure 5 illustrates a signal flow diagram between a user equipment and a network node of a non-terrestrial network in accordance with another example embodiment of the present disclosure;
Figure 6 illustrates the determination of the location of a user equipment in accordance with an example embodiment of the present disclosure;
Figure 7 illustrates a flowchart of the operations performed by a user equipment in accordance with an example embodiment of the present disclosure;
Figure 8 illustrates a flowchart of the operations performed by a user equipment in accordance with another example embodiment of the present disclosure;
Figure 9 illustrates a flowchart of the operations performed by a network node in accordance with an example embodiment of the present disclosure; and
Figure 10 illustrates a flowchart of the operations performed by a network node in accordance with another example embodiment of the present disclosure.

### DETAILED DESCRIPTION

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

A user equipment (UE) may communicate with a radio network including a terrestrial network node, such as a base station, e.g., a gNB or other type of access point, via a non-terrestrial network that may operate in a transparent architecture to relay signals between a UE and a terrestrial base station in at least certain circumstances, such as in instances in which the UE is far away from the terrestrial network node and unable to reliably communicate with the terrestrial network node. Similarly, a UE may communicate with a network node, such as a base station, carried by a satellite of a non-terrestrial network with the network node carried by the satellite also being in communication with the terrestrial radio network such that the network node carried by the satellite serves to facilitate communication between the UE and the terrestrial radio network in a regenerative architecture. A UE refers to any end device that may be capable of wireless communication and may also be known as a terminal device, a communication device, a Subscriber Station (SS), or a Mobile Station (MS). The UE may include a mobile phone, cellular phone, smart phone, voice over IP (VoIP) phone, wireless local loop phone, tablet, wearable terminal device, personal digital assistant (PDA), portable computer, desktop computer, image capture terminal device such as a digital camera, gaming terminal device, music storage and playback appliance, vehicle-mounted wireless terminal device, USB dongle, Internet of Things (IoT) device, watch or other wearable, head-mounted display (HMD), vehicle, drone, medical device and applications (e.g., remote surgery), industrial device and applications (e.g., a robot and/or other wireless devices operating in an industrial and/or an automated processing chain contexts), consumer electronics device, device operating on commercial and/or industrial wireless networks, and the like. A network node includes a base station (BS), an access point (AP) or an access node. The network node may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay or an Integrated Access and Backhaul (IAB) node. A non-terrestrial network may include one or more airborne platforms, such as satellites, drones or the like. In certain embodiments described below, the non-terrestrial network includes one or more satellites, such as low-earth orbiting (LEO) satellites, which are described by way of example but not of limitation. The satellites orbit the Earth and may relay signals between a UE and a terrestrial base station in a transparent architecture or may carry a base station that is in communication with both the UE and a terrestrial radio network in a regenerative architecture, thereby providing coverage and service to the UE even when the UE is far away from the terrestrial base station or the terrestrial radio network. As such, the network node may include the satellite or the network node may be housed in one of: a satellite carrying the base station (regenerative mode), an aerial vehicle, a floating balloon, a flying drone; a seaborn vessel; or a mobile vehicle or the network node may be a stationary terrestrial network node, such as a fixed base station on land.

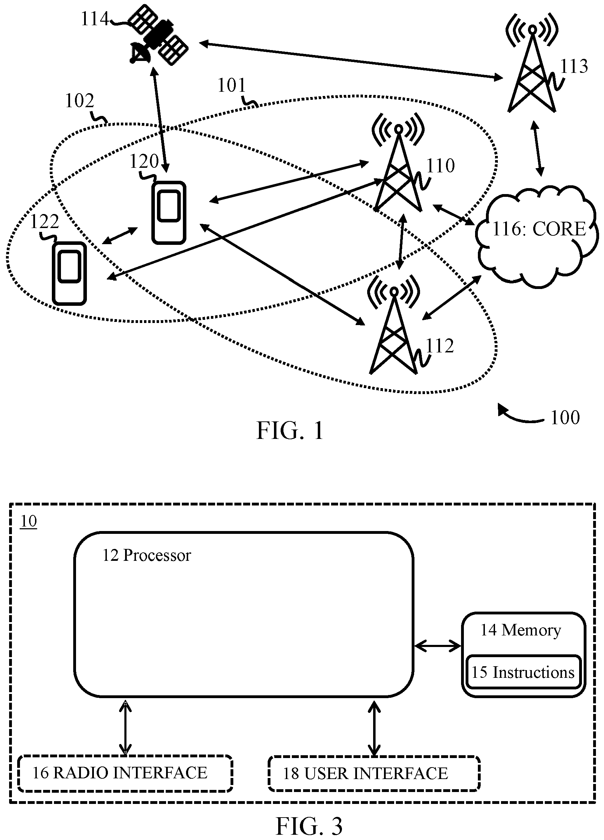

One example of a radio network that includes or is in communication with a non-terrestrial network is depicted in Figure 1. The communication network or a cellular communication network may comprise a network node (110) providing one or more cells, such as cell (101), and a network node (112) providing one or more other cells, such as cell (102). Each cell may be, e.g., a macro cell, a micro cell, femto, or a pico cell, for example, a cell may define a coverage area or a service area of the corresponding network node. As also shown in Figure 1, the communication network also includes an additional network node (113) with which the UE (120) is unable to communicate other than by utilizing a non-terrestrial network including a satellite (114). In a transparent architecture, the additional network node (113) may be a terrestrial network node such that the satellite (114) relays the signals transmitted between the UE (120) and the additional network node (113). Alternatively, the satellite (114) may include or carry the additional network node (113) in a regenerative architecture.

The network nodes (110, 112, 113) may provide a user equipment (UE) 120 (one or more UEs) with wireless access to the communication network. The wireless access may comprise downlink (DL) communication from the network node to the UE 120 and uplink (UL) communication from the UE 120 to the network node (110, 112, 113). Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment (120).

There may be a plurality of UEs (120, 122) in the system. Each of them may be served by the same or by different network nodes (110, 112, 113). In the case of multiple network nodes (110, 112, 113) in the communication network, at least some of the network nodes (110, 112) may be connected to each other via an interface. LTE specifications call such an interface as (412, 512) interface. An interface between an LTE node and a 5G node, or between two 5G nodes may be called Xn interface.

The network nodes (110, 112, 113) may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells (101, 102) and handle signalling connections between the UEs (120, 122) and the core network (116). The gateway node may handle data routing in the core network (116) and to/from the UEs (120, 122). The 5G specifications specify the core network (116) as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

To effectively communicate with a satellite, the UE applies pre-compensation to the uplink transmissions to ensure proper time and frequency synchronization of the signals. This pre-compensation is dependent on knowledge by the UE of its position and the ephemeris of the satellite, which provides position information for the satellite, both currently and in the future. In order to facilitate pre-compensation and, as a result, communication between a UE and a non-terrestrial network, a user equipment, a network node and associated methods are provided in accordance with certain example embodiments to determine the location of the UE, even in an instance in which the UE does not include a GNSS receiver or in which the UE is otherwise unable to determine its position utilizing GNSS.

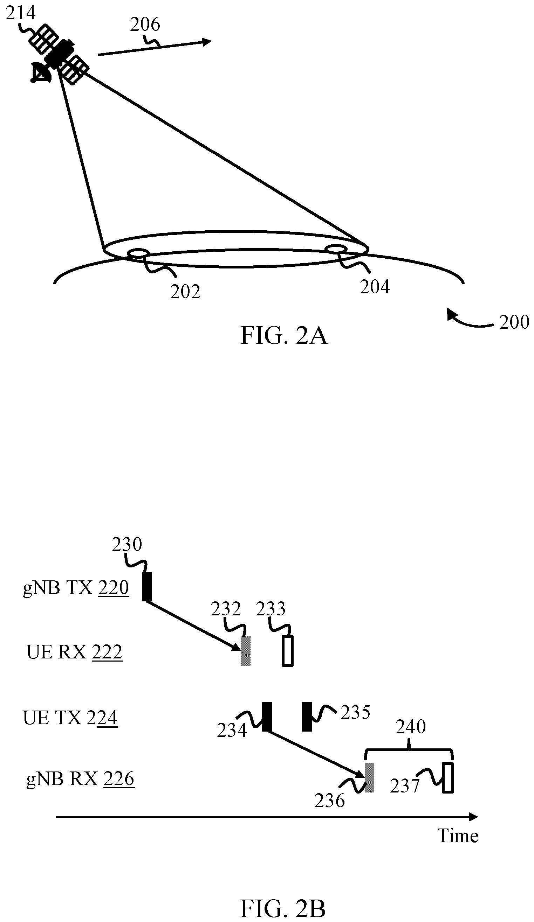

As shown in Figure 2A, the region on the Earth (200) that is visible to a satellite (214) orbiting about the Earth (200) has a circular or elliptical shape and a UE located anywhere within the circular or elliptical region can transmit uplink signals that may be received by the satellite (214). However, as also shown in Figure 1A, the propagation delay of signals transmitted by the UE to the satellite (214) varies dependent upon the location of the UE within the region with the signals transmitted by the UE located at point (202) having a smaller propagation delay than the signals transmitted by the UE located at point (204). As the satellite (214) is orbiting the Earth in an orbital direction (206), the propagation delays between the UE and the satellite (214) also vary as a function of time and elevation angle. As a result of the relatively high velocity of the satellite (214), signals transmitted between the UE and the satellite (214) will also experience a Doppler shift, e.g., a frequency offset. Absent information defining its location, a UE will be unable to compensate for the varying propagation delays and Doppler shift experienced by the uplink signals transmitted by the UE, such as during performance of uplink access.

As shown in Figure 2B, for example, a signal (220) transmitted by a base station, e.g., gNB, carried by a satellite (214), at time (230) experiences a delay (delay1) prior to reception (222) of the signal by the UE. The first delay can vary within a first range defined by a first time (232) and a second time (233) dependent upon the location of the UE within the region of the Earth (200) visible to the satellite (214). The UE then transmits a signal (224) to the base station carried by the satellite (214). The time at which the UE transmits the signal (224) also varies within a second range dependent upon the time at which the UE received the signal (222) from the base station carried by the satellite (214). The second range varies from a third time (234) in an instance in which the signal (220) transmitted by the base station carried by the satellite (214) was received at the first time (232) to a fourth time (235) in an instance in which the signal (220) transmitted by the base station carried by the satellite (214) was received at the second time (233). The signal transmitted by the UE also experiences a delay (delay1) prior to reception (226) by the base station carried by the satellite (214). This first delay can again vary within the first range dependent upon the location of the UE. As such, the base station carried by the satellite (214) receives the signal transmitted by the UE within a third range (240), larger than the first and second ranges as a result of the additive nature of the potential delays between the UE and the base station. As shown in Figure 2B, the third range (240) of this example embodiment extends from a fifth time (236) in an instance in which the signal (224) was transmitted by the user equipment at the third time (234) to a sixth time (237) in an instance in which the signal (224) was transmitted by the user equipment at the fourth time (235).

In those instances in which the location of the UE is not accurately defined and the UE is therefore unable to apply appropriate pre-compensation, the substantial uncertainty associated with the time and frequency at which the signals transmitted by the UE will be received by the satellite (214) will make it challenging, if not impossible, for the UE to reliably communicate with the satellite (214) and, in some embodiments, with a terrestrial base station to which the satellite (214) would otherwise relay the signals. The inability to apply proper pre-compensation in an instance in which the location of the UE is not defined with accuracy is not only an issue for current networks including 5G New Radio (NR) networks, but the location of the UE will also need to be known in future networks, such as 6G networks, to allow for communication between a UE and a non-terrestrial network. In this regard, 3GPP document S1-244214 states that "[t]he 6G system with satellite access shall be able to provide network assistance data for the UE to determine its position whatever its connection state (connected, idle, or inactive) or its mobility conditions (at speed up to [50] km/h) without the need for any additional non 3GPP positioning capability." S1-244214 also states that "[t]he network assistance data provided by the 6G system via its satellite access shall enable the UE to determine its position with a 2D accuracy better than [100] meters and [90%] availability in the area covered by the satellite access, without increasing the UE's energy consumption by more than [5]% upon activation of the positioning method. S1-244214 further states that "[t]he network assistance data provided by the 6G system via its satellite access shall enable the UE to determine its position with a 2D accuracy better than [50] meters and [90%] availability in the area covered by the satellite access, without increasing the UE's energy consumption by more than [10]% upon activation of the positioning method" and "[t]he IoT or low-power UE shall be able to perform ranging measurements to satellites from multiple satellite networks to determine its position."

A UE, network node, method and computer program product are therefore provided in order to provide a positioning technique to determine the location of a UE to facilitate communication with a non-terrestrial network without reliance upon an external location service, such as a GNSS. Thus, the UE, network node, method and computer program product operate in a manner that is agnostic to GNSS. Based upon the location of the UE determined in accordance with an example embodiment and the satellite ephemeris, the UE can apply appropriate pre-compensation to the uplink signals to a satellite (214) of the non-terrestrial network such that the UE and the satellite (214) can communicate reliably. In some embodiments, the satellite (214) can then relay signals received from the UE to a terrestrial-based base station.

Figure 3 shows, by way of example, a block diagram of an apparatus (10). For example, the apparatus (10) may be the UE or may be comprised or embodied by a UE, e.g. as a chipset configured to control the UE. As another example, the apparatus may be the network node or may be comprised or embodied by such a network node, e.g. as a chipset configured to control the network node.

In ither example, the apparatus (10) comprises, for example, at least one processor (12) and at least one memory (14) storing instructions (15) that, when executed by the at least one processor, cause the apparatus (10) at least to perform the method or methods as disclosed herein, and any of the embodiments thereof. In an example, the at least one memory and the instructions (e.g. a computer program code, software), are configured, with the at least one processor, to cause the apparatus (10) to perform the method or methods as disclosed herein, and any of the embodiments thereof.

A processor (12) may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory (14) may be implemented using any suitable data storage technology. The memory may comprise a database for storing data. The memory (14) may be at least in part external to apparatus (10) but accessible to apparatus (10).

The instructions (15) may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

The apparatus (10) comprises a radio interface (16). The radio interface (16) may provide the apparatus (10) with communication capabilities. The radio interface (16) may comprise a receiver configured to receive information in accordance with at least one cellular or non-cellular standard. The radio interface (16) may comprise a transmitter configured to transmit information in accordance with at least one cellular or non-cellular standard. The receiver may comprise more than one receiver. The transmitter may comprise more than one transmitter. The radio interface (16) may comprise a transceiver configured to receive and transmit information in accordance with at least one cellular or non-cellular standard. The transceiver may comprise more than one transceiver.

The apparatus (10) may optionally comprise a user interface (18) that may include, for example, at least one of a keypad, a microphone, a touch display, a display, a speaker, etc. The user interface (18) may be used to control the apparatus by the user. The user interface (18) may be external to the apparatus (10). For example, the apparatus (10) may be connected to another device, such as a computer, either via wireless or wired connection, and the apparatus (10) is controlled by the user via the computer.

In an embodiment, at least some of the processes described herein may be carried out by an apparatus that may include means for carrying out at least some of the described processes. Means for performing method steps as disclosed herein may include software and/or hardware components of the apparatus (10). For example, the at least one processor (12), the memory (14), and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

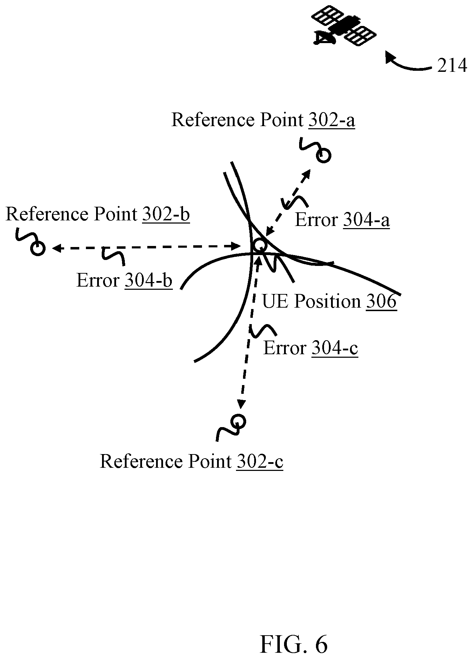

As shown by signals (426, 526),in order to determine the location of the UE (420, 520) without reliance upon an external positioning system, such as GNSS, the UE (420, 520) is provided with a plurality of first reference points (411, 511) from a network node (414, 514), such as from a base station carried by the satellite (214) or to which the satellite (214) relays signals. The reference points may be geographical points (such as geographical coordinates in longitude, latitude) on the surface of the Earth (200). Alternatively, the reference points may be spaced from the surface of the Earth (200), such as by being positioned above the surface of the Earth (altitude). In an example embodiment depicted in Figure 6 for purposes of illustration but not of limitation, however, the reference points (302-a, 302-b, 302-c) are on the surface of the Earth (200). In another example, the reference points may be designated in x, y, z coordinates relative to another known fixed reference point. In an example implementation, the reference points may be provided through one of the following: broadcasted by one or more network nodes within a cell, or provided as UE specific signaling, such as radio resource control (RRC) signaling. Yet in another implementation, the reference points may be pre-configured in the UE. The foregoing are provided by way of example and the many practical implementations of the reference points may be outside the scope of the disclosure.

Although the reference points (411, 511) that are indicated by the network node (414, 514) may be positioned anywhere on or about the Earth (200), the reference points (411, 511) of an example embodiment are visible to the satellite (214) of the non-terrestrial network that will be communicating with the UE (420, 520). In this regard, the reference points (411, 511) in this example embodiments are in a direct line of sight of the satellite (214) during the period of time during which the satellite (214) and the UE (420, 520) will communicate such that the signals transmitted between the UE (420, 520) and the satellite (214) will experience the anticipated Doppler delays and time offsets.

The reference points (411, 511), including the location of each reference point, may be provided by at least one network node (414, 514) of the non-terrestrial network, such as by broadcasting the reference points (411, 511) in association with one of: an identification (418a) of the user equipment (420), a group identification (ID) (418b) of a plurality of UEs (420, 520) or by transmitting a message specific to the UE (420, 520) for which the reference points (411, 511) are intended for use with the UE (420, 20) identified by the identification of the UE (420, 520). Alternatively, the reference points (411, 511), including the location of each reference point may be predefined for both the network node (414, 514) and the UE (420, 520), such as by being coded into the UE (420, 520), e.g., the firmware of the UE (420, 520).

Any number of reference points (411, 511) may be defined, such as two or more reference points. In an example embodiment, at least three reference points (411, 511) are defined. Although the reference points (411, 511) may have different relative positions, the reference points (411, 511) of an example embodiment are all within a region visible to the satellite (214) and are spaced apart from one another and from the UE (420, 520). The reference points (411, 511) may be identified

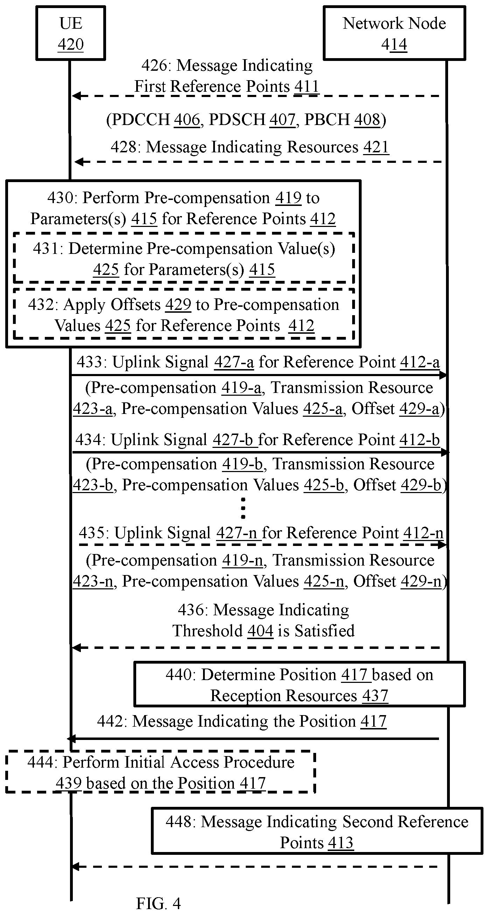

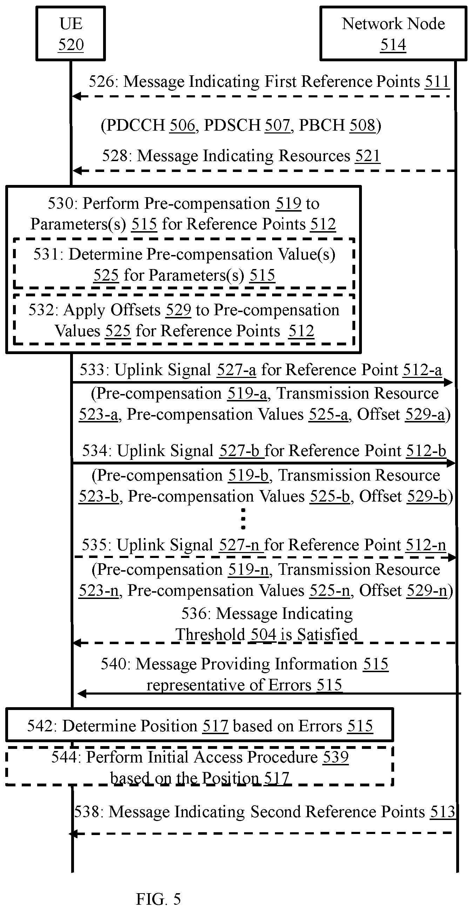

In addition to the reference points (411, 511), one or more resources (421, 521) for the communication between the UE (420, 520) and the network node (414, 514) are also defined, such as by a message (428, 528) transmitted from the network node (414, 514) to the UE (420, 20) as shown in Figures 4 and 5. Although the one or more resources (421, 521) may be provided to the UE (420, 520) by the network node (414, 514), the one or more resources may alternatively be predefined for the UE (420, 520) and the network node (414, 514). Various resources (421, 521) may be defined including, for example, one or more random access channel (RACH) occasions (ROs) that define a time and frequency slot in which a UE (420, 520) can transmit a preamble signal on the physical random access channel (PRACH) to initiate communication with a network. Additionally or alternatively, the resources (421, 521) that are defined for communication between the UE (420, 520) and the network node (414, 514) can be other types of time and/or frequency resources that define the time and/or frequency at which the network node (414, 514) anticipates receiving signals from the UE (420, 520).

In an embodiment in which the network node (414, 514) provides messages (426, 428, 526, 528) indicating the first reference points (411, 511) and the resources (421, 521), the messages may be provide in any of various channels. For example, the messages (426, 428, 526, 528) may be provided using a physical downlink channel, such as the physical downlink control channel (PDCCH) (406, 506) or the physical downlink shared channel (PDSCH) (407, 507), or the physical broadcast channel (PBCH) (408, 508).

In order to reduce or eliminate the impact on traditional random access procedures, and to maintain orthogonality between UEs, separate resources (421, 521) may be defined relative to the resources utilized for traditional random access procedures and separate resources (421, 521) may be defined for each UE (420, 520) with which a network node (414, 514) communicates. In this regard, a different set of resources (421, 521) may be scheduled for each UE (420, 520) that will communicate with the network node (414, 514) relative to other UEs or devices with which the network node (414, 514) anticipates communicating.

The UE (420, 520) then prepares to transmit signals to the network node (414, 514) from which the location of the UE (420, 520) may be determined. In this regard, the UE (420, 520) applies pre-compensation to the signals to be transmitted to the network node (414, 514) utilizing the location of a particular reference point (412, 512) and the ephemeris information provided by the network node (414, 514) such that the signal transmitted by the UE (420, 520) would be expected to be received by the network node (414, 514) utilizing the resources defined for the UE (420, 520) by the network node (414, 514), such as being received utilized the time and/or frequency resources defined for the UE (420, 520) by the network node (414, 514). As illustrated by (430, 530) in Figures 4 and 5, the UE (420, 520) is configured to perform pre-compensation (419, 519) for uplink transmission parameter(s), (415, 515), such as the time delay and the frequency shift for time and frequency resources, for reference points (412, 512) by determining (431, 531) the pre-compensation value(s) (425, 525) for the parameter(s) (421, 521) utilizing the location of a particular reference point (412, 512) and the ephemeris information provided by the network node (414, 514). For each reference point (412, 512) that is utilized by the UE (420, 520), the UE (420, 520) applies pre-compensation to the signals to be transmitted to the network node (414, 514) not only based upon the ephemeris information, but also based upon the location of the respective reference point (412, 512).

As such, the UE (420, 520) effectively transmits the signals utilizing pre-compensation (419, 519) as though the UE (420, 520) were co-located with a particular reference point. In an example embodiment, the user equipment (420) may utilize one or more uplink transmission parameters (415) that may include at least one of the following: a time delay or a frequency shift or the plurality of uplink signals (427) that may include, for example, random access preambles or sounding reference signals. The UE (420, 520) repeats this process for each of two or more of the reference points (412-a, 512-a, 412-b, 512-b,... 412-n, 512-n). As shown at 433, 533, for example, uplink signal 427-a, 527-a) is transmitted from the UE (420, 520) to the network node (414, 514) with the UE (420, 520) presumed to be co-located with a first reference point (412-a, 512-a), after having performed pre-compensation (419-a, 519-a) by applying the pre-compensation value(s) (425-a, 525-a) to the resources (423-a, 523-a) associated with the first reference point (412-a, 512-a). Similarly, as shown at 434, 534, uplink signal 427-b, 527-b) is transmitted from the UE (420, 520) to the network node (414, 514) with the UE (420, 520) presumed to be co-located with a second reference point (412-b, 512-b), after having performed pre-compensation (419-b, 519-b) by applying the pre-compensation value(s) (425-b, 525-b) to the resources (423-b, 523-b) associated with the second reference point (412-b, 512-b). This process is repeated for a plurality of reference points as indicated a (435, 535) with uplink signal 427-n, 527-n) being transmitted from the UE (420, 520) to the network node (414, 514) with the UE (420, 520) presumed to be co-located with the n-th reference point (412-n, 512-n), after having performed pre-compensation (419-n, 519-n) by applying the pre-compensation value(s) (425-n, 525-n) to the resources (423-n, 523-n) associated with reference point (412-n, 512-n).

The UE (420, 520) can separately transmit signals to the network node (414, 514) after having applied pre-compensation for each of the reference points (412, 512) or a predefined number of the reference points (412, 512) that have been defined by the network node (414, 514) for the UE (420, 520). Additionally or alternatively, the UE (420, 520) can transmit signals after having applied pre-compensation for a plurality of different reference points (412, 512) in a set of reference points (412, 512) defined by the network node (414, 514) for the UE (420, 520) until the UE (420, 520) receives a signal, such as from the network node (414, 514), indicating that the UE (420, 520) need not transmit any additional signals in an effort to determine its actual location. For example, an uplink signal threshold (404, 504) may be defined that indicates the number of reference points (412, 512) for which uplink signals are to be provided in order to determine the location of the UE (420, 520) with sufficient accuracy. Once the network node (414, 514) determines that the uplink signal threshold (404, 504) is satisfied, the network node (414, 514) can transmit a message (436, 536) to the UE (420, 520) indicating that the uplink signal threshold (404, 504) has been satisfied. Alternatively, the network node (414, 514) can transmit the threshold to the UE (420, 520) such that the UE can determine an instance in which the threshold is satisfied such that UE (420, 520) need not transmit additional signals associated with other reference points (412, 512).

The reference points (412, 512) to be utilized for determination of the location of the UE (420, 520) may also be dependent on the physical layer parameters of the reference points (412, 512) and the UE (420, 520). In this regard, in addition to the location of the reference points (412, 512), the network node (414, 514) may also provide information regarding the expected physical layer parameters, such as frequency offset (FO) of the respective reference points (412, 512). In an instance in which the UE (420, 520) is not necessarily transmitting uplink signals from each of the reference points (412, 512), the UE (420, 520) may determine the reference points (412, 512) having physical layer parameters that are most closely aligned to the physical layer parameters of the UE (420, 520) and then transmit uplink signals to which pre-compensation (419, 519) has been applied for the subset of the reference points that were determined to have physical layer parameters that are most closely aligned to the physical layer parameters of the UE (420, 520). In this embodiment, the UE (420, 520) would not transmit signals to the network node (414, 514) for those reference points (412, 512) having physical layer parameters that are most misaligned relative to the physical layer parameters of the UE (420, 520).

The signals transmitted by a UE (420, 520) may include an identification of the UE (420, 520) in order to distinguish the signals transmitted by the UE (420, 520) from signals transmitted by other UEs (420, 520). In one embodiment, each UE (420, 520) may be assigned different time and frequency resources. In this embodiment, the UE (420, 520) may be configured to transmit signals, such as initial access signals, based upon an assumption that the UE (420, 520) is co-located with a particular reference point (412, 512) and utilizing the time and frequency resources assigned to the UE (420, 520). The network node (412, 512) of this embodiment is configured to recognize the time and frequency resources that are utilized as being assigned to a respective UE (420, 520) and, as a result, identifies the UE (420, 520) that is transmitting the signals. Although a UE (420, 520) may utilize different time and frequency resources for each reference point (412, 512) that has been defined for use by UE (420, 520), the network node (412, 512) may be configured to recognize the time and frequency resources utilized by the UE (420, 520) for signals transmitted by the UE (420, 520) for any of the plurality of reference points as being transmitted by the particular UE (420, 520), thereby serving to identify the UE (420, 520).

In another embodiment, the plurality of uplink signals (427-a, 427-b, ... 427-n) include a preamble to identify the user equipment (420), correspond to reference points (412-a, 412-b,...412-n) configured for the user equipment (420) and are transmitted via transmission resources (423-a, 423-b,... 423-n) selected using a modulo operation that is based on an identity of the user equipment (420). In this regard, the UE (420, 520) may be configured to select the time and frequency resources to be utilized for each different reference point (412, 512) utilizing an identifier associated with the UE (420, 520), such as by applying a modulo operation. In this embodiment, different modulo operations may be configured for different reference points (412, 512) such that the UE (420, 520) will not select the same time and frequency resources for each of the reference points (412, 512), but will instead select different time and frequency resources for each reference point (412, 512) as a result of the different modulo operations configured for the different reference points (412, 512). In this embodiment, a different maximum number of time and frequency resources may be configured for the different reference points (412, 512) to be utilized by the UE (420, 520). For example, N may be the maximum number of time and frequency resources configured for the first reference point and M may be the maximum number of time and frequency resources for a second reference point. The UE (420, 520) is configured to then utilize a different modulo operation to derive the time and frequency resources for the different reference points (412, 512), such as UE ID mod N and UE ID mod M for the first and second reference points, respectively. Even in an instance in which the selected time and frequency resources for the first reference point are defined to be the same for two or more UEs (420, 520), the time and frequency resources utilized by those same UEs (420, 520) for the remainder of the reference points (412, 512) will be different, thereby serving to uniquely identify the different UEs (420, 520).

In another embodiment, a set of delta pre-compensation values are associated with each of the reference points (412, 512). The set of delta pre-compensation values may be provided to the UE (420, 520) by the network node (414, 514) or may be predefined for both the network node (414, 514) and the UE (420, 520). In use, a UE (420, 520) will determine the pre-compensation values to be utilized for signals transmitted by the UE (420, 520) that is assumed to be co-located with a respective reference point (412, 512) based upon the time and frequency resources associated with the reference point and the ephemeris information associated with the network node (414, 514). In this embodiment, the UE (420, 520) is configured to additionally apply the delta pre-compensation values to the pre-compensation values (425, 525) that had been determined by the UE (420, 520) as indicated at (432, 532) and as exemplified by offset (429-a, 529-a) for reference point (412-a, 512-a), offset (429-b, 529-b) for reference point (412-b, 512-b) and so on until offset (429-n, 529-n) for reference point (412-n, 512-n) in Figures 4 and 5. By assigning the unique set of delta pre-compensation values to a UE (420, 520), the final pre-compensation values including the pre-compensation values (425, 525) that have been determined by the UE (420, 520) and the additional delta pre-compensation values (429, 429) are unique to and identify a respective UE (420, 520). The range and granularity of the delta pre-compensation values (429, 529) may be defined such that none of the final pre-compensation values that are utilized by any of the UEs (420, 520) in conjunction with a particular reference point (412, 512) are the same as or can be mapped to the final pre-compensation values of another reference point. Additionally, signals transmitted by the network node (414, 514) to the UE (420, 520) can be addressed to the particular UE (420, 520) by the delta pre-compensation values or at least a subset of the delta pre-compensation values such that the signals transmitted by the network node (414, 514) are specific to the particular UE (420, 520).

By way of example in which three reference points (412, 512) have been defined for use by the UE (420, 520) to determine its location, each reference point (412, 512) is associated with three pairs of pre-compensated values (425, 525) for Doppler shift and time delay. For example, reference point 1 is associated with a Doppler shift and time delay of (D₁, T₁), reference point 2 is associated with a Doppler shift and time delay of (D₂, T₂) and reference point 3 is associated with a Doppler shift and time delay of (D₃, T₃). A set of delta pre-compensation values may also be provided to and utilized by the UE (420, 520) with the delta pre-compensation values being defined as [-2Δ_{D}, -1Δ_{D}, 0, +1Δ_{D}, +2Δ_{D}] for the Doppler shift and [₋2Δ_{T}, -1Δ_{T}, 0, +1Δ_{T}, +2Δ_{T}] for the time delay. The UE (420, 520) then determines the pre-compensation value that will be utilized in conjunction with respective reference point (412, 512) and then applies a delta pre-compensation value for the Doppler shift and the time delay by selecting one of the delta pre-compensation values from each of the sets of delta pre-compensation values that have been provided with respect to Doppler shift and time delay. For example, a UE (420, 520) may separately transmit signals based upon the assumption that the UE (420, 520) is co-located with each of three different reference points with pre-compensation in the form of (D₁+1Δ_{D}, T₁+0) for the Doppler shift and time delay, respectively, for the first reference point, pre-compensation in the form of (D₂-2Δ_{D}, T₂+2Δ_{T}) for the Doppler shift and time delay, respectively, for the second reference point, and pre-compensation in the form of (D₃+0, T₃-1Δ_{T}) for the Doppler shift and time delay, respectively, for the third reference point. In response to the signals transmitted by the UE (420, 520) to the network node (414, 514), the network node (414, 514) may respond with a signal uniquely directed to the UE (420, 520) by applying the delta pre-compensation values associated with the particular UE (420, 520).

In another embodiment, the UE (420, 520) is configured to select a particular preamble in which the UE is identified and to transmit signals in each of a plurality of different ROs, each of which corresponds to a respective reference point (412, 512). A mapping between the ROs and the particular reference point may be defined by the network node (414, 514) provided to the UE (420, 520) or may be predefined for both the network node (414, 514) and the UE (420, 520). In either instance, one or more ROs may be associated with a respective reference point and may be utilized by the network node (412, 512) to identify a particular UE (420, 520).

The signals transmitted by the UE (420, 520) utilizing pre-compensation values that are based on the assumption that the UE (420, 520) is co-located with a respective reference point (412, 512) are received by the network node (414, 514). In an instance in which the UE (420, 520) is not co-located with the respective reference point (412, 512), the signals will be received by the network node (414, 514) outside of the time and frequency resources that have been associated with the respective reference point (412, 512). The network node (414, 514) can therefore identify an error in time t_error(X) with X designating the respective reference point (412, 512). The error in time defines or is otherwise based upon the difference in time between the time at which the network node (414, 514) anticipated receiving signals from the UE (420, 520) if the UE (420, 520) were actually co-located with the respective reference point (412, 512) and the time at which the network node (414, 514) actually received the signals from the UE (420, 520) with the difference in time associated with the difference in locations of the UE (420, 520) and the respective reference point (412, 512). Although particular ROs have been defined by the network node (414, 514) for each of the reference points (412, 512), the network node (414, 514) is configured to listen for signals from the UE (420, 520) over a wider window. For example, the network node (414, 514) may listen for signals from the UE (420, 520) over one physical resource block (PRB) in the frequency domain.

Based upon the speed of travel of a signal transmitted between the UE (420, 520) and the network node (414, 514), the error in time can be converted to a distance error which, in turn, can be projected as a circle or arc about the respective reference point (412, 512) on the surface of the earth (200). By defining a similar circle or arc about a plurality of the reference points (412, 512) on the surface of the earth (200), the actual location of the UE (420, 520) can be defined, such as by triangulation for three reference points (412, 512) or more generally multilateration for a plurality of reference points (412, 512). With respect to Figure 6, for example, arcs based upon errors (304-a, 304-b, 304-c) associated with reference points (302-a, 302-b, 302-c) define the actual UE position (306). In one embodiment, the distance error for the signals received by the network node (414, 514) that were transmitted by a UE (420, 520) that is assumed to be co-located with a particular reference point (412, 512) is based not only upon the error in time, but also upon the azimuth and elevation angle of the signals.

In one embodiment, the network node (412, 512) is configured to determine the location of UE (420, 520) and then to provide information defining the location of the UE (420, 520) to the UE (420, 520). In this regard, the network node (414) of Figure 4 is configured at (440) to determine the location (417) of the UE (420) based on the resources (423), such as based on a difference between the ROs at which the network node (414) anticipated receiving the uplink signal from the UE (420) and the ROs at which the network node (414) actually received the uplink signal from the UE (420). In this embodiment, the network node (414) is also configured to transmit a message (442) to the UE (420) indicating the location (417) of the UE (420).

In another embodiment depicted in Figure 5, the network node (514) is configured to provide a message (540) including the information regarding the errors associated with the signals transmitted by the UE (520) in association with each of the reference points (412, 512), such as the errors in time or the distances associated with the errors in time, to the UE (520). In this embodiment, the UE (520) can then determine its location, such as by triangulation for three reference points (412, 512) or more generally multilateration for a plurality of reference points (412, 512).

As shown at (444, 544), once the location of the UE (420, 520) has been defined, the UE (420, 520) can subsequently communicate with the network node (414, 514), such as by performing an initial access procedure (437, 537) by applying pre-compensation that is based not only upon the ephemeris information associated with the satellite (214), but also the actual location (417, 517) of the UE (420, 520). This process of determining the location of the UE (420, 520) may not only be performed during an initial random access procedure (RACH), but may be repeated when changing cells or as the UE (420, 520) changes its location to permit reliable communication between the UE (420, 520) and the network node (414, 514) even in the absence of an external positioning system, such as GNSS.

In some embodiments, following initial access of the UE (420, 520) to the network node (414, 514), the set of reference points (413, 513) may be updated by the network node (414, 514) and provided to the UE (420, 520) by message (448, 548). The set of reference points (413, 513) may be updated based on an evaluation by the network node (414, 514) of the distance and/or time error to each reference point (412, 512). To avoid larger cyclic prefix (CP) lengths in the radio resource control (RRC) connected state, the network node (414, 514) may configure the set of reference points (412, 512) to be utilized to determine the location of the UE (420, 520) to be based upon the distance between the UE (420, 520) and the reference points (412, 512). In this regard, the network node (414, 514) may be configured to define a set of reference points (412, 512) to be those reference points close enough to the UE (420, 520) such that the time error is within the CP length of the physical uplink shared channel (PUSCH), physical uplink control channel (PUCCH) or sounding reference signal (SRS) (typically smaller than the CP length of the physical random access channel (PRACH)). The location of the reference points (412, 512) may be repeatedly updated during communication between the UE (420, 520) and the network node (414, 514) to avoid large CP lengths in the RRC connected state. In one embodiment, the SRS may be enhanced for this purpose so that each SRS could be transmitted with pre-compensation parameters of the respective reference point (412, 512) at which the UE (420, 520) is assumed to be located for purposes of the signal transmission.

In another embodiment, the UE (420, 520) is configured to accommodate the timing difference caused by signals being transmitted by the UE (420, 520) that is assumed to be co-located with a reference point (412, 512). In this embodiment, the UE (420, 520) is configured to transmit a signal having a CP that has a length that is sufficient such that the network node (414, 514) will be able to detect the timing advance in an instance in which the UE (420, 520) is assumed to be co-located with any of the reference points (412, 512) defined for the UE (420, 520).

In a further embodiment, the UE (420, 520) may be configured to transmit signals that are unique for the reference point (412, 512) for which the UE (420, 520) is presumed to be co-located. As such, the network node (412, 512) of this embodiment is configured to identify both the time and frequency offsets, such as multi-tone and time-based keying signals, based upon the unique signals transmitted by the UE (420, 520).

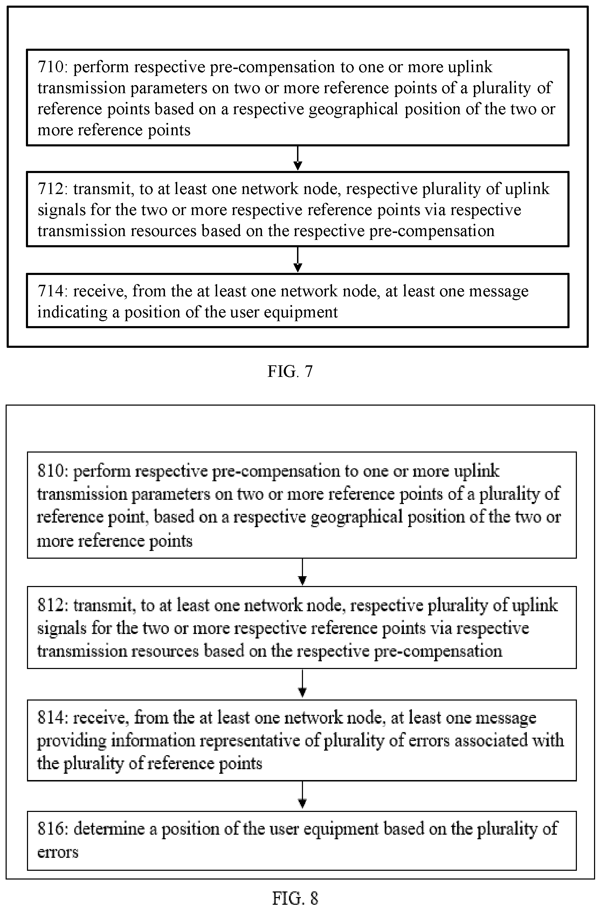

Referring to Figures 7 and 8, the operations performed by the user equipment (420, 520) in accordance with certain example embodiments are depicted. As shown in blocks 710 and 810, the user equipment (420, 520) includes means, such as the at least one processor (12), for performing (430, 530) respective pre-compensation (419-a, 519-a, 419-b, 519-b, ...419-n, 519-n) to one or more uplink transmission parameters (415, 515) on two or more reference points (412-a, 512-a, 412-b, 512-b,...412-n, 512-n) of a plurality of reference points (412, 512), based on a respective geographical position of the two or more reference points (412-a, 512-a, 412-b, 512b,... 412-n, 512-n). As shown in blocks 712 and 812, the user equipment (420, 520) also includes means, such as the at least one processor (12) and/or the radio interface (16), for transmitting (433, 533, 434, 534, 435, 535), to at least one network node (414, 514), respective plurality of uplink signals (427-a, 527-a, 427-b, 527-b,... 427-n, 527-n) for the two or more respective reference points (412-a, 512-a, 412-b, 512-b,... 412-n, 512-n) via respective transmission resources (423-a, 523-a, 423-b, 523-b, ... 423-n, 523-n) based on the respective pre-compensation (419-a, 519-a, 419-b, 519-b, ...419-n, 519-n).

In the embodiment of Figure 7, the user equipment (420, 520) also includes means, such as the at least one processor (12) and/or the radio interface (16), for receiving, from the at least one network node (414) at least one message (442) indicating the position (417) of the UE (420, 520). Alternatively, in the embodiment of Figure 8, the user equipment (420, 520) includes means, such as the at least one processor (12) and/or the radio interface (16) for receiving, from the at least one network node (514), at least one message (540) providing information representative of plurality of errors (515) associated with the plurality of reference points (512). In the embodiment of Figure 8, the user equipment (420, 520) also includes means, such as the at least one processor (12), for determining a position (517) of the user equipment (520) based on the plurality of errors (515).

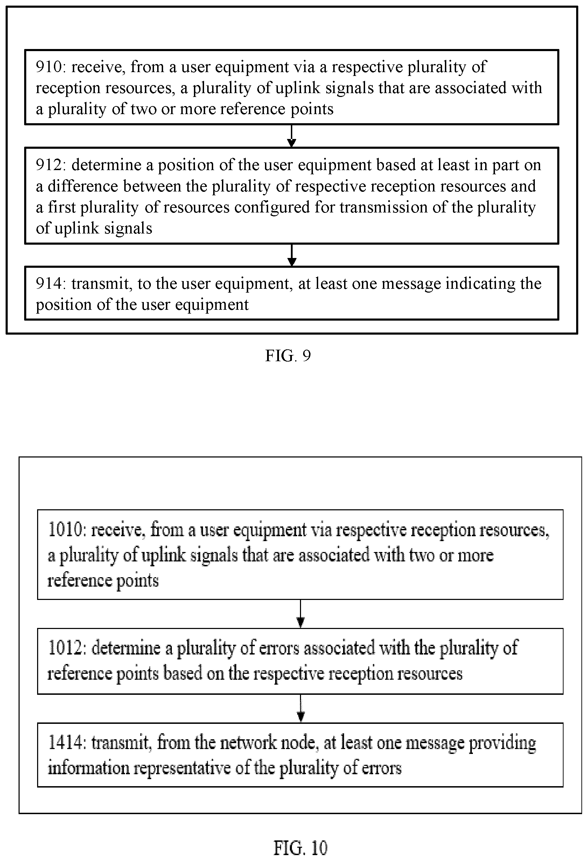

With reference to Figure 9, the operations performed by a network node (414) in accordance with an example embodiment described above with respect to Figure 4 are depicted. As shown in block 910, the user equipment (414) includes means, such as at least one processor (12) and/or the radio interface (16), for receiving (433), from a user equipment (420) via respective reception resources (437), a plurality of uplink signals (427) that are associated with two or more reference points (412-a, 412-b,...412-n). As shown in block 912, the network node (414) includes means, such as the at least one processor (12) for determining (440) a position (417) of the user equipment (420) based at least in part on a difference between the respective reception resources (437) and a first plurality of resources (421) configured for transmission of the plurality of uplink signals (427). As shown in block 914, the network node (414) further incudes means, such as the at least one processor (12) and/or the radio interface (16) for transmitting (442), to the user equipment (420), at least one message indicating the position (417) of the user equipment (420).

Referring to Figure 10, the operations performed by a network node (514) in accordance with another example embodiment described above with respect to Figure 5 are depicted. As shown in block 1010, the network node (514) includes means, such as the at least one processor (12) and/or the radio interface (16) for receiving (533, 534, 535), from a user equipment (520) via respective reception resources (523-a, 523-b, ... 523-n), a plurality of uplink signals (527) that are associated with two or more reference points (512-a, 512-b,... 512-n). As shown in block 1012, the network node (514) also includes means, such as the at least one processor (12) for determining a plurality of errors (515) associated with the plurality of reference points (512-a, 512-b,... 512-n) based on the respective reception resources (523-a, 523-b,... 523-n). The network node (514) further includes means, such as at least one processor (12) and/or the radio interface (16), for transmitting (540), from the network node (514), at least one message providing information representative of the plurality of errors (515).

In a first example, a user equipment (420) is provided for wireless communication, including: at least one processor (12); and -at least one memory (14) storing instructions (15) that, when executed by the at least one processor (12), cause the user equipment (420) at least to: perform (430), respective pre-compensation (419-a, 419-b,... 419-n) to one or more uplink transmission parameters (415) on two or more reference points (412-a, 412-b,... 412-n) of a plurality of reference points (412), based on a respective geographical position of the two or more reference points (412-a, 412-b,... 412-n); transmit (433, 434, 435), to at least one network node (414), respective plurality of uplink signals (427-a, 427-b, 427-n) for the two or more respective reference points (412-a, 412-b,... 412-n), via respective transmission resources (423-a, 423-b,... 423-n), based on the respective pre-compensation (419-a, 419-b,... 419-n); and receive (442), from the at least one network node (414), at least one message indicating a position (417) of the user equipment (420).

In some examples, one or more of the following is further performed by the user equipment (420): the two or more respective reference points (412-a, 412-b,... 412-n) are either provided by the at least one network node (414), or firmware coded into the user equipment (420); a determination of the position (417) of the user equipment (420) takes place during one of: an initial random access procedure (RACH) (439), when changing cell, or whenever an updating of the position (417) of the user equipment is needed; the determination of the position (417) of the user equipment (420) is independent of utilizing information communicated from a global navigation satellite system (GNSS) (410); or the position of the user equipment (420) is based on a plurality of reception resources (437) associated with the respective plurality of uplink signals (427a to 427n).

In some examples, the user equipment (420) is caused to: receive (426), from the at least one network node (414), at least one first message (426a) indicating respective coordinates for a first plurality of reference points (412a to 412c) included in the plurality of reference points (412) based on an identification (ID) (418a) of the user equipment (420) or a group ID (418b) of a plurality of user equipment (420, 422).

In some examples, the first message (426a) is received via a physical downlink channel (406, 407) or a physical broadcast channel (408).

In some examples, the user equipment (420) is caused to: receive (428), from the network node (414), a second message (428a) indicating a first plurality of resources (421) for transmission (433, 434, 435) of the plurality of uplink signals (427), wherein the plurality of transmission resources (423) are based on application of the pre-compensation (419-a, 419-b,... 419-n) to the first plurality of resources (421).

In some examples, the plurality of uplink signals (427-a, 427-b, ... 427-n) include a preamble to identify the user equipment (420), correspond to reference points (412-a, 412-b,...412-n) configured for the user equipment (420) and are transmitted via transmission resources (423-a, 423-b,... 423-n) selected using a modulo operation that is based on an identity of the user equipment (420).

In some examples, the plurality of transmission resources (423) includes a plurality of random access occasions.

In some examples, to perform (430) the respective pre-compensation (419-a, 419-b, 419-n) for each of the plurality of reference points (412-a, 412-b, 412-n), the instructions (15), when executed by the at least one processor (15), cause the user equipment (420) to: apply a respective offset (429-a, 429-b, 429-n) to each of the one or more respective pre-compensation values (425-a, 425-b, 425-n), wherein the respective offset (429-a) for the reference point (412-a) is based at least in part on the reference point (412-a).

In some examples, the plurality of offsets (429-a, 429 b, 429 n) serves to identify the user equipment (420).

In some examples, the user equipment (420) is caused to: receive (436), from the network node (414), a third message indicating that a threshold (404) on positioning determination is satisfied.

In some examples, the user equipment (420) is caused to: receive (438), from the network node (414), a fourth message indicating respective coordinates for a second plurality of reference points (413), wherein the second plurality of reference points (413) is based at least in part on a respective distance between the position (417) and each reference point (412-a, 412-b, 412-n) of the plurality of reference points (412).

In some examples, the user equipment (420) is caused to: perform (444) an initial access procedure (439) based at least in part on the position (417) of the user equipment (420).

In some examples, one or both of the following are utilized by the user equipment (420): the one or more uplink transmission parameters (415) include at least one of the following: a time delay or a frequency shift; or the plurality of uplink signals (427) include random access preambles or sounding reference signals.

In some examples, the network node (414) includes one of: a satellite; or a network node housed in one of: an aerial vehicle, a floating balloon, a flying drone; a seaborn vessel; a mobile vehicle or a stationary terrestrial network node.

In a second example, a method is provided for wireless communication, including: performing (430) by a user equipment (420), respective pre-compensation (419-a, 419-b,... 419-n) to one or more uplink transmission parameters (415) on two or more reference points (412-a, 412-b,... 412-n) of a plurality of reference points (412), based on a respective geographical position of the two or more reference points (412-a, 412-b,... 412-n); transmitting (433, 434, 435), to at least one network node (414), respective plurality of uplink signals (427-a, 427-b, 427-n) for the two or more respective reference points (412-a, 412-b,... 412-n), via respective transmission resources (423-a, 423-b,... 423-n), based on the respective pre-compensation (419-a, 419-b,... 419-n); and receiving (442), from the at least one network node (414), at least one message indicating a position (417) of the user equipment (420).

In some examples, a non-transitory computer readable storage medium is provided for storing instructions that, when executed by an apparatus, cause the apparatus at least to perform the method of the second example.

In a third example, a user equipment (420) is provided for wireless communication, including: means for performing (430), respective pre-compensation (419-a, 419-b,... 419-n) to one or more uplink transmission parameters (415) on two or more reference points (412-a, 412-b,... 412-n) of a plurality of reference points (412), based on a respective geographical position of the two or more reference points (412-a, 412-b,... 412-n); means for transmitting (433, 434, 435), to at least one network node (414), respective plurality of uplink signals (427-a, 427-b, 427-n) for the two or more respective reference points (412-a, 412-b,... 412-n), via respective transmission resources (423-a, 423-b,... 423-n), based on the respective pre-compensation (419-a, 419-b,... 419-n); and means for receiving (442), from the at least one network node (414), at least one message indicating a position (417) of the user equipment (420).

In a fourth example, a network node (414) for wireless communication, including: at least one processor (12); and at least one memory (14) storing instructions (15) that, when executed by the at least one processor (12), cause the network node (414) at least to: receive (433), from a user equipment (420) via respective reception resources (437), a plurality of uplink signals (427) that are associated with two or more reference points (412-a, 412-b,... 412-n); determine (440) a position (417) of the user equipment (420) based at least in part on a difference between the respective reception resources (437) and a first plurality of resources (421) configured for transmission of the plurality of uplink signals (427); and transmit (442), to the user equipment (420), at least one message indicating the position (417) of the user equipment (420).

In a fifth example, a method is provided for wireless communication, including: receiving (433), from a user equipment (420) via respective reception resources (437), a plurality of uplink signals (427) that are associated with two or more reference points (412-a, 412-b,... 412-n); determining (440) a position (417) of the user equipment (420) based at least in part on a difference between the respective reception resources (437) and a first plurality of resources (421) configured for transmission of the plurality of uplink signals (427); and transmitting (442), to the user equipment (420), at least one message indicating the position (417) of the user equipment (420).

In some examples, a non-transitory computer readable storage medium is provided for storing instructions that, when executed by an apparatus, cause the apparatus at least to perform the method of the fifth example.

In a sixth example, a network node is provided for wireless communication, including: means for receiving (433), from a user equipment (420) via respective reception resources (437), a plurality of uplink signals (427) that are associated with two or more reference points (412-a, 412-b,...412-n); means for determining (440) a position (417) of the user equipment (420) based at least in part on a difference between the respective reception resources (437) and a first plurality of resources (421) configured for transmission of the plurality of uplink signals (427); and means for transmitting (442), to the user equipment (420), at least one message indicating the position (417) of the user equipment (420).

In a first example, a user equipment (520) is provided for wireless communication, that may include: at least one processor (12); and at least one memory (14) storing instructions (15) that, when executed by the at least one processor (12), cause the user equipment (520) at least to: perform (530) respective pre-compensation (519-a, 519-b, 519-n) to one or more uplink transmission parameters (515) on two or more reference points (512-a, 512-b,... 512-n) of a plurality of reference points (512), based on a respective geographical position of the two or more reference points (512-a, 512b,... 512-n); transmit (533, 534, 535), to at least one network node (514), respective plurality of uplink signals (527-a, 527-b, 527-n) for the two or more respective reference points (512-a, 512-b,... 512-n) via respective transmission resources (523-a, 523-b, 523-n) based on the respective pre-compensation (519-a, 519-b, 519-n); receive (540), from the at least one network node (514), at least one message providing information representative of plurality of errors (515) associated with the plurality of reference points (512); and determine a position (517) of the user equipment (520) based on the plurality of errors (515).

In some examples, one or more of the following is further performed by the user equipment (520): the two or more respective reference points (512-a, 512-b,... 512-n) are either provided by the at least one network node (514), or firmware coded into the user equipment (520); a determination of the position (517) of the user equipment (520) takes place during one of: an initial random access procedure (RACH) (539), when changing cell, or whenever an updating of the position (517) of the user equipment is needed; the determination of the position (517) of the user equipment (520) is independent of utilizing information communicated from a global navigation satellite system (GNSS) (510); or the position of the user equipment (520) is based on a plurality of reception resources (537) associated with the respective plurality of uplink signals (527a to 527n).

In some examples, the plurality of errors (515) comprises at least one of the following: a respective distance offset associated with each of the plurality of reference points (512-a, 512-b, 512-n), wherein the respective distance offset is relative to the position (517), or a respective time offset associated with each of the plurality of reference points (512-a, 512-b, 512-n), wherein the respective time offset is relative to a first resource (521) configured for transmission (533) of the respective uplink signal (527-a).

In some examples, the user equipment (520) is caused to: receive (526), from the at least one network node (514), at least one first message (526a) indicating respective coordinates for a first plurality of reference points (512a to 512c) comprised in the plurality of reference points (512) based on an identification (ID) (518a) of the user equipment (520) or a group ID (518b) of a plurality of user equipment (520, 522).

In some examples, the first message (526a) is received via a physical downlink channel (506, 507) or a physical broadcast channel (508).

In some examples, the user equipment (520) is caused to: receive (528), from the network node (514), a second message (528a) indicating a first plurality of resources (521) for transmission (533, 534, 535) of the plurality of uplink signals (527), wherein the plurality of transmission resources (523) are based on application of the pre-compensation (519-a, 519-b,... 519-n) to the first plurality of resources (521).

In some examples, the plurality of uplink signals (527-a, 527-b,... 527-n) include a preamble to identify the user equipment (520), correspond to reference points (512-a, 512-b,... 512-n) configured for the user equipment (520) and are transmitted via transmission resources (523-a, 523-b,... 523-n) selected using a modulo operation that is based on an identification of the user equipment (520).

In some examples, the plurality of transmission resources (523) comprises a plurality of random access occasions.

In some examples, to perform (530) the respective pre-compensation (519) for each of the plurality of reference points (512), the instructions (15), when executed by the at least one processor (15), cause the user equipment (520) to: apply a respective offset (529-a, 525-b, 525-n) to each of the one or more respective pre-compensation values (525-a, 525-b, 525-n), wherein the respective offset (529-a) for the reference point (512-a) is based at least in part on the reference point (512-a).

In some examples, the plurality of offsets (529) serves to identify the user equipment (520).

In some examples, the user equipment (520) is caused to: receive (536), from the network node (514), a third message indicating that a threshold (504) on positioning determination is satisfied.

In some examples, the user equipment (520) is caused to: receive (538), from the network node (514), a fourth message indicating respective coordinates for a second plurality of reference points (513), wherein the second plurality of reference points (513) is based at least in part on a respective distance between the position (517) and each reference point (512-a, 512-b, 512-n) of the plurality of reference points (512).

In some examples, the user equipment (520) is caused to: perform (544) an initial access procedure (539) based at least in part on the position (517) of the user equipment (520).

In some examples, one or both of the following are utilized by the user equipment: the one or more uplink transmission parameters (515) comprise at least one of the following: a time delay or a frequency shift; or the plurality of uplink signals (527) comprise random access preambles or sounding reference signals.

In some examples, the network node (514) comprises one of: a satellite, or a network node housed in one of: an aerial vehicle, a floating balloon, a seaborn vessel, a mobile vehicle or a stationary terrestrial network node.

In a second example, a method is provided for wireless communication, that may include: performing (530) by a user equipment (520) respective pre-compensation (519-a, 519-b, 519-n) to one or more uplink transmission parameters (515) on two or more reference points (512-a, 512-b,... 512-n) of a plurality of reference points (512), based on a respective geographical position of the two or more reference points (512-a, 512b,... 512-n); transmitting (533, 534, 535), to at least one network node (514), respective plurality of uplink signals (527-a, 527-b, 527-n) for the two or more respective reference points (512-a, 512-b,... 512-n) via respective transmission resources (523-a, 523-b, 523-n) based on the respective pre-compensation (519-a, 519-b, 519-n); receiving (540), from the at least one network node (514), at least one message providing information representative of plurality of errors (515) associated with the plurality of reference points (512); and determining a position (517) of the user equipment (520) based on the plurality of errors (515).

In some examples, a non-transitory computer readable storage medium is provided storing instructions that, when executed by an apparatus, cause the apparatus at least to perform the method of the second example.

In a third example, a user equipment (520) is provided for wireless communication, that may include: means for performing (530) respective pre-compensation (519-a, 519-b, 519-n) to one or more uplink transmission parameters (515) on two or more reference points (512-a, 512-b,... 512-n) of a plurality of reference points (512), based on a respective geographical position of the two or more reference points (512-a, 512b,... 512-n); means for transmitting (533, 534, 535), to at least one network node (514), respective plurality of uplink signals (527-a, 527-b, 527-n) for the two or more respective reference points (512-a, 512-b,... 512-n) via respective transmission resources (523-a, 523-b, 523-n) based on the respective pre-compensation (519-a, 519-b, 519-n); means for receiving (540), from the at least one network node (514), at least one message providing information representative of plurality of errors (515) associated with the plurality of reference points (512); and means for determining a position (517) of the user equipment (520) based on the plurality of errors (515).

In a fourth example, a network node (514) is provided for wireless communication, that may include: at least one processor (12); and at least one memory (14) storing instructions (15) that, when executed by the at least one processor (12), cause the network node (514) at least to: receive (533, 534, 535), from a user equipment (520) via respective reception resources (523-a, 523-b, 523-n), a plurality of uplink signals (527) that are associated with two or more reference points (512-a, 512-b,... 512-n); determine a plurality of errors (515) associated with the plurality of reference points (512-a, 512-b,... 512-n) based on the respective reception resources (523-a, 523-b,... 523-n); and transmit (540), from the network node (514), at least one message providing information representative of the plurality of errors (515).

In a fifth example, a method is provided for wireless communication, that may include: receiving (533, 534, 535), from a user equipment (520) via respective reception resources (523-a, 523-b, 523-n), a plurality of uplink signals (527) that are associated with two or more reference points (512-a, 512-b,... 512-n); determining a plurality of errors (515) associated with the plurality of reference points (512-a, 512-b,... 512-n) based on the respective reception resources (523-a, 523-b,... 523-n); and transmitting (540), from the network node (514), at least one message providing information representative of the plurality of errors (515).

In some examples, a non-transitory computer readable storage medium is provided storing instructions that, when executed by an apparatus, cause the apparatus at least to perform the method of the fifth example.

In a sixth example, a network node (514) is provided for wireless communication, that may include: means for receiving (533, 534, 535), from a user equipment (520) via respective reception resources (523-a, 523-b, 523-n), a plurality of uplink signals (527) that are associated with two or more reference points (512-a, 512-b,... 512-n); means for determining a plurality of errors (515) associated with the plurality of reference points (512-a, 512-b,... 512-n) based on the respective reception resources (523-a, 523-b,... 523-n); and means for transmitting (540), from the network node (514), at least one message providing information representative of the plurality of errors (515).

The blocks, related functions, and information exchanges (messages) described above by means of FIGS. 4, 5 and 7-10 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above but may vary within the scope of the claims. Therefore, all words and expressions should be interpreted broadly, and they are intended to illustrate, not to restrict, the embodiments.

## Claims

1. A user equipment (520) for wireless communication, comprising:
at least one processor (12); and
at least one memory (14) storing instructions (15) that, when executed by the at least one processor (12), cause the user equipment (520) at least to:
perform (530) respective pre-compensation (519-a, 519-b, 519-n) to one or more uplink transmission parameters (515) on two or more reference points (512-a, 512-b,... 512-n) of a plurality of reference points (512), based on a respective geographical position of the two or more reference points (512-a, 512b,... 512-n);
transmit (533, 534, 535), to at least one network node (514), respective plurality of uplink signals (527-a, 527-b, 527-n) for the two or more respective reference points (512-a, 512-b,... 512-n) via respective transmission resources (523-a, 523-b, 523-n) based on the respective pre-compensation (519-a, 519-b, 519-n);
receive (540), from the at least one network node (514), at least one message providing information representative of plurality of errors (515) associated with the plurality of reference points (512); and
determine a position (517) of the user equipment (520) based on the plurality of errors (515).

2. The user equipment according to claim 1, wherein: one or more of the following is further performed by the user equipment (520):
the two or more respective reference points (512-a, 512-b,... 512-n) are either provided by the at least one network node (514), or firmware coded into the user equipment (520);
a determination of the position (517) of the user equipment (520) takes place during one of: an initial random access procedure (RACH) (539), when changing cell, or whenever an updating of the position (517) of the user equipment is needed;
the determination of the position (517) of the user equipment (520) is independent of utilizing information communicated from a global navigation satellite system (GNSS) (510); or
the position of the user equipment (520) is based on a plurality of reception resources (537) associated with the respective plurality of uplink signals (527a to 527n).

3. The user equipment according to any of claims 1 or 2, wherein the plurality of errors (515) comprises at least one of the following:
a respective distance offset associated with each of the plurality of reference points (512-a, 512-b, 512-n), wherein the respective distance offset is relative to the position (517), or
a respective time offset associated with each of the plurality of reference points (512-a, 512-b, 512-n), wherein the respective time offset is relative to a first resource (521) configured for transmission (533) of the respective uplink signal (527-a).

4. The user equipment according to any of the preceding claims, wherein the user equipment (520) is caused to:
receive (526), from the at least one network node (514), at least one first message (526a) indicating respective coordinates for a first plurality of reference points (512a to 512c) comprised in the plurality of reference points (512) based on an identification (ID) (518a) of the user equipment (520) or a group ID (518b) of a plurality of user equipment (520, 522) .

5. The user equipment according to claim 4, wherein the first message (526a) is received via a physical downlink channel (506, 507) or a physical broadcast channel (508).

6. The user equipment according to any of the preceding claims, wherein user equipment (520) is caused to:
receive (528), from the network node (514), a second message (528a) indicating a first plurality of resources (521) for transmission (533, 534, 535) of the plurality of uplink signals (527), wherein the plurality of transmission resources (523) are based on application of the pre-compensation (519-a, 519-b,... 519-n) to the first plurality of resources (521).

7. The user equipment according to any of the preceding claims, wherein the plurality of uplink signals (527-a, 527-b,... 527-n) include a preamble to identify the user equipment (520), correspond to reference points (512-a, 512-b,... 512-n) configured for the user equipment (520) and are transmitted via transmission resources (523-a, 523-b,... 523-n) selected using a modulo operation that is based on an identification of the user equipment (520).

8. The user equipment according to any of the preceding claims, wherein the plurality of transmission resources (523) comprises a plurality of random access occasions.

9. The user equipment according to any of the preceding claims, wherein, to perform (530) the respective pre-compensation (519) for each of the plurality of reference points (512), the instructions (15), when executed by the at least one processor (15), cause the user equipment (520) to:
apply a respective offset (529-a, 525-b, 525-n) to each of the one or more respective pre-compensation values (525-a, 525-b, 525-n), wherein the respective offset (529-a) for the reference point (512-a) is based at least in part on the reference point (512-a).

10. The user equipment according to claim 9, wherein the plurality of offsets (529) serves to identify the user equipment (520).

11. The user equipment according to any of the preceding claims, wherein he user equipment (520) is caused to:
receive (536), from the network node (514), a third message indicating that a threshold (504) on positioning determination is satisfied.

12. The user equipment according to any of the preceding claims, wherein the user equipment (520) is caused to:
receive (538), from the network node (514), a fourth message indicating respective coordinates for a second plurality of reference points (513), wherein the second plurality of reference points (513) is based at least in part on a respective distance between the position (517) and each reference point (512-a, 512-b, 512-n) of the plurality of reference points (512).

13. The user equipment according to any of the preceding claims, wherein the user equipment (520) is caused to:
perform (544) an initial access procedure (539) based at least in part on the position (517) of the user equipment (520).

14. The user equipment according to any of the preceding claims, wherein one or more of the following are utilized by the user equipment:
the one or more uplink transmission parameters (515) comprise at least one of the following: a time delay or a frequency shift;
the plurality of uplink signals (527) comprise random access preambles or sounding reference signals; or
the network node (514) comprises one of: a satellite, or a network node housed in one of: an aerial vehicle, a floating balloon, a seaborn vessel, a mobile vehicle or a stationary terrestrial network node.

15. A network node (514) for wireless communication, comprising:
at least one processor (12); and
at least one memory (14) storing instructions (15) that, when executed by the at least one processor (12), cause the network node (514) at least to:
receive (533, 534, 535), from a user equipment (520) via respective reception resources (523-a, 523-b, 523-n), a plurality of uplink signals (527) that are associated with two or more reference points (512-a, 512-b,... 512-n);
determine a plurality of errors (515) associated with the plurality of reference points (512-a, 512-b,... 512-n) based on the respective reception resources (523-a, 523-b,... 523-n); and
transmit (540), from the network node (514), at least one message providing information representative of the plurality of errors (515).
